# EUROPEAN PATENT APPLICATION

(11) **EP 4 516 452 A1**
(43) Date of publication of application: **05.03.2025**
(21) Application number: 24197168.8
(22) Date of filing: 29.08.2024
(51) Int. Cl.: B24B 13/00, B29D 11/00, B24B 13/01

(54) **A METHOD FOR POLISHING A SURFACE**

(30) Priority: 31.08.2023 EP 23306452
(71) Applicant: Essilor International, 94220 Charenton-Le-Pont (FR)
(72) Inventor: CASTRO MARTINEZ, Luis Ricardo, 94220 Charenton-le-pont (FR); BESSONNET, Stephane, 94220 Charenton-le-pont (FR); BARRANCO, Brian, 94220 Charenton-le-pont (FR)
(74) Representative: Korakis-Ménager, Sophie

(57) **Abstract**

A method for manufacturing an ophthalmic device, comprising a polishing step to polish a surface comprising at least one unpolished zone, the at least one unpolished zone is a zone intended not to be polished. The polishing step comprises covering during which a protective cover is provided on the surface so as to cover the at least one unpolished zone; polishing at least a part of the surface and removing the protective cover.

## Description

### TECHNICAL FIELD

The present invention is in the ophthalmic field, and it relates to a method for manufacturing an ophthalmic device comprising a polishing step of a surface of a mold or an ophthalmic lens or a semi-finished lens. The present invention is also related to an intermediate mold intended to be used for molding the ophthalmic lens. The present invention is also related to a finished ophthalmic lens or a semi-finished ophthalmic lens.

### BACKGROUND

In general, a spectacle lens is specifically manufactured according to every wearer's needs which may take the form of specifications defined in a prescription established by an ophthalmologist or an optometrist.

For the manufacturing of a lens, a lens blank is submitted to various steps to form the desired lens, in particular one, surfacing step, also called cutting step, during which the shape of the lens blank is processed to produce what can be referred to as a surfaced lens so that the latter exhibits desired optical properties. The shape of the surface of the lens or the lens blank may be obtained by directly cutting the surface or may be obtained by molding via a mold previously cut according to the desired optical properties.

In practice, such as an operation may be carried out on a blank or a semi-finished lens blank whose front surface has previously been processed, the operation of surfacing essentially impacts one of the surfaces of the lens blank, typically the back surface, according to the prescription.

In addition to the required desired optical properties, the surface quality obtained must be such that no irregularity occurs which would be transmitted to the resulting product and would conduct to digress from the required desired optical properties. Indeed, the resulting product may be very sensitive to these surface irregularities. There is therefore a need for a method that makes it possible to reduce these surface irregularities.

The irregularities may have several origins. In particular, when the cutting step is done by diamond turning, these irregularities may occur on the edge or in the center due to cutting instabilities. Even if the general form could be fine and the roughness very close of an optical element specification, the irregularities may cause undesired chromatic effects on the surface, like CD or rainbow effects or quiet rings.

A way to limit these irregularities is to polish the surface of the lens or the lens blank after the cutting step. However, in the case of discontinuity of the surface (such as protrusion, microstructure, pattern....), the polishing step may cause an undesirable sharpness reduction, attenuating the desired optical function.

Thus, one option is to polish the protrusions but reducing the quality. Another solution is to keep the cut surface without polishing but having some chromatic effects.

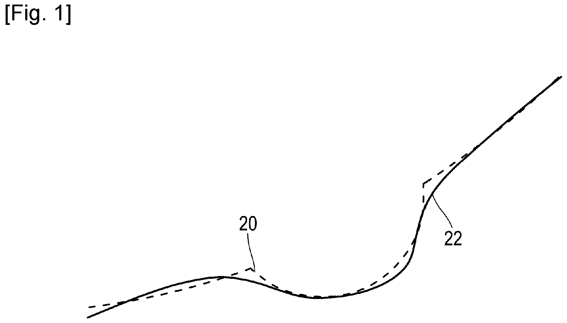

To illustrate the undesirable effect, figure 1 represents a side view of an ophthalmic device manufactured by a method according to the prior art. In particular, figure 1 represents a protrusion of the ophthalmic device. The dot line 20 is the protrusion cut by diamond turning before polishing and the line 22 is the protrusion after polishing. The protrusion after polishing doesn't keep the desired shape obtained by cutting before polishing and consequently doesn't have the desired optical function.

There is a need for a method and a system that deals directly with the irregularities originated from the surfacing tool to increase the precision of the final lens and reduce the rejected lens.

### SUMMARY

The goal is obtained according to the present disclosure thanks to a method for manufacturing an ophthalmic device, comprising a polishing step to polish a surface of the ophthalmic device comprising at least one unpolished zone. The at least one unpolished zone is a zone intended not to be polished. The polishing step comprises:
- covering during which a protective cover is provided on the surface so as to cover the at least one unpolished zone;
- polishing at least a part of the surface; and
- removing the protective cover.

Thanks to the disclosure, by covering the at least one unpolished zone is possible to avoid deteriorations of the unpolished zone.

The ophthalmic device may be a mold or an insert intended to manufacture an ophthalmic lens or semi-finished ophthalmic lens. The ophthalmic device may be an ophthalmic lens.

The ophthalmic lens may be a progressive lens (PAL), or lens for slow down the myopia or Plano lens (without correction).

The at least one unpolished zone may be micro elements, protrusion, micro lens, engraving, groove, discontinuity, pattern, figure, scattering element(s), shape.

The at least one unpolished zone may be at least one cavity or at least one concave micro elements of an ophthalmic lens or a mold to manufacture an ophthalmic lens. In this embodiment, the protective cover may fill the cavity or the concave micro elements, in other words, the material of the protective cover may fill the cavity or the concave micro elements.

The micro elements may be convex or concave, spherical or aspherical, bifocal or unifocal, or pi-Fresnel.

For example, when the unpolished zone is protrusions, thanks to the disclosure, by covering the at least one unpolished zone is possible to avoid deteriorations of the protrusions and thus to avoid for example chromatics effects. Advantageous and convenient features of the manufacturing method are described below.

The covering may be taping. The protective cover may be a protective tape.

The protective cover may be a film deposed on the surface so as to cover the at least one unpolished zone.

The protective cover may be at least a layer made by an additive manufacturing process such as Fused Deposition Modeling (FDM), SLS Selective Laser Sintering, Granulate FDM, Multi Jet Fusion (MJF), Material Jetting (MJ).

The covering may be coating by inkjet or spin.

The covering may be an additive manufacturing process such as Fused Deposition Modeling (FDM), SLS Selective Laser Sintering, Granulate FDM, Multi Jet Fusion (MJF), Material Jetting (MJ).

The polishing at least a part of the surface may polish the part of the surface which is no covered by the protective cover.

The polishing at least a part of the surface may polish the part of the surface which is no covered by the protective cover. The polishing may be homogenous on the part of the surface which is no covered by the protective cover. In other words, the material stock removal by the polishing process may be homogenous on the uncovered surface.

During the polishing, material of the surface may be removed.

During the polishing, material which is no covered by the protective cover, may be removed.

The thickness of the material removal may be lower than 20µm, lower than 1µm and preferred lower than 0.1µm.

The surface comprising the at least one unpolished zone may be a surface of a mold intended to be used to mold the ophthalmic lens.

The surface of the mold before the polishing step may be coated with NiP or ferrous material.

The surface comprising the at least one unpolished zone may be a surface of a semi-finished lens or a finished lens.

Before the polishing step, a surfacing step may be comprised during the manufacturing method. The surfacing step uses a tool to surface the surface surface of the ophthalmic device. The tool is made of a first material and fixed by a carrier element made of a second material. The first material has a higher hardness than the second element.

For example, the tool may be a diamond tool.

The thickness of the protective cover may be superior to 10µm. The thickness of the protective cover may be superior to 20µm. The thickness of the protective cover may be comprised between 10µm and 350µm.

The thickness of the protective cover being superior to 10µm, it allows to avoid removing all the protective cover during the polishing step. Indeed, in the field of polishing of ophthalmic element, during the polishing, at least 10µm of materials are removed.

The thickness of the protective cover on the edge may be lower than 200µm.

The thickness of the protective cover on the edge may be lower than 100µm.

The thickness of the protective cover on the edge may be lower than 5µm.

The thickness of the protective cover on the edge may be as thin as possible to warrant the surface continuity between the polished surface and unpolished zone.

The unpolished zone may be determined by a mask. The mask may be had different kind of geometries such as cylinder or semi cylinder or any kind of shape.

The disclosure also provides, according to a second aspect, an intermediate mold intended to be used to manufacture an ophthalmic lens. The intermediate mold may comprise: a metallic bulk, a surface of the metallic bulk comprising the at least one unpolished zone, and a protective cover disposed on a part or on the totality of the at least one unpolished zone.

The intermediate mold comprising the metallic bulk may comprise a coating having the at least one discontinuity.

The disclosure also provides, according to a third aspect, an ophthalmic lens. The ophthalmic lens comprises: a surface comprising at least one unpolished zone and a protective cover disposed on a part or on the totality of the at least one unpolished zone.

The disclosure also provides, according to a fourth aspect, a semi-finished ophthalmic lens. The semi-finished ophthalmic lens comprises a surface comprising the at least one unpolished zone and a protective cover disposed on a part or on the totality of the at least one unpolished zone.

### BRIEF DESCRIPTION OF THE DRAWINGS

The description of the disclosure now continues with a detailed description of advantageous embodiments given hereinafter by way of non-limiting example and with reference to the appended drawings.
Figure 1 represents an ophthalmic device manufactured by a method according to the prior art.
Figures 2A and 2B are flowcharts illustrating the method according to two embodiments of the present disclosure.
Figures 3A,3B and 3C represent an ophthalmic device with the protective cover respectively top and side view according two embodiments of the present disclosure .

### DETAILED DESCRIPTION OF EXAMPLE EMBODIMENTS

In the description which follows the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts.

Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

To avoid unnecessary details for practicing the invention, the description may omit certain information already known to those skilled in the art.

The disclosure is directed to a method for manufacturing an ophthalmic device comprising a polishing step to polish a surface of the ophthalmic device comprising at least one unpolished zone, the at least one unpolished zone is a zone intended not to be polished.

The ophthalmic device may be a lens, an unifocal lens, a bifocal lens, a progressive lens, a semi-finished lens, a mold or an insert intented to manufacture a lens, an unifocal lens, a bifocal lens, a progressive lens, a semi-finished lens. The ophthalmic device may be used in the field of single vision, bifocal lens, progressive lens, Plano lens or slowing myopia.

The at least one unpolished zone may be micro elements, protrusion, micro lens, engraving, groove, discontinuity, pattern, figure, scattering element(s), shape.

The at least one unpolished zone may be cavity or concave micro elements. It may be at least one cavity or at least one concave micro elements of an ophthalmic lens or a mold to manufacture an ophthalmic lens.

The protective cover may fill the cavity or the concave micro elements, in other words, the material of the protective cover may fill the cavity or the concave micro elements.

The micro elements may be convex or concave, spherical or aspherical, bifocal or unifocal, or pi-Fresnel.

The unpolished zone may be esthetical features or technical features to slow done the myopia or technical features to correct visual defects.

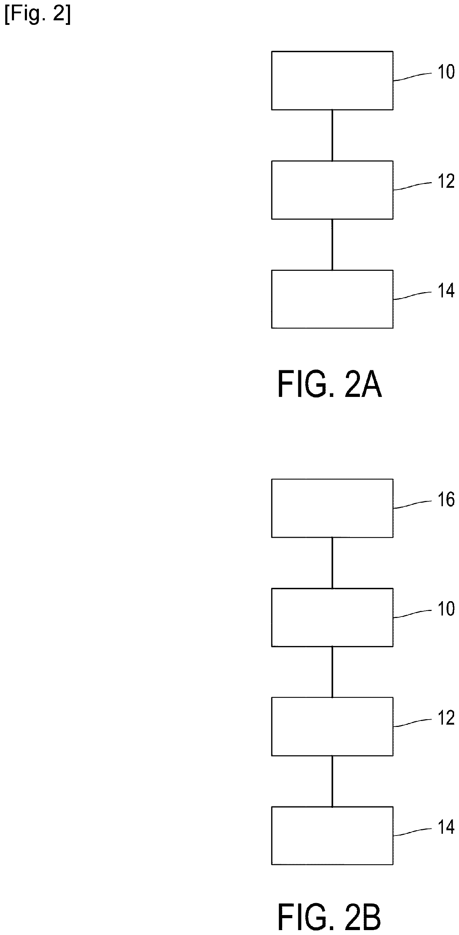

Figures 2A illustrates the steps of the method of the present disclosure.

The polishing step comprises:
- covering 10 during which a protective cover is provided on the surface so as to cover the at least one unpolished zone;
- polishing 12 at least a part of the surface; and
- removing 14 the protective cover.

Thanks to the disclosure, by covering the at least one unpolished zone is possible to avoid deteriorations of the unpolished zone.

For example, when the unpolished zone is protrusions, thanks to the disclosure, by covering the at least one unpolished zone is possible to avoid deteriorations of the protrusions and thus to avoid for example chromatics effects. Advantageous and convenient features of the manufacturing method are described below.

The covering may be taping. The protective cover may be a protective tape, such as an adhesive film.

The protective cover may be a film deposed on the surface so as to cover the at least one unpolished zone.

The protective cover may be at least a layer made by an additive manufacturing process such as Fused Deposition Modeling (FDM), SLS Selective Laser Sintering, Granulate FDM, Multi Jet Fusion (MJF), Material Jetting (MJ).The covering may be coating by inkjet, spin or by aerosol.

The covering may be an additive manufacturing process such as Fused Deposition Modeling (FDM), SLS Selective Laser Sintering, Granulate FDM, Multi Jet Fusion (MJF), Material Jetting (MJ).

The coating may be a material that changes of state after application, for example from gas or liquid to solid.

To cover, a mask may be used to define the unpolished zone without cover the remainder of the ophthalmic device.

The protective cover may be Pressure Sensitive Adhesive Tape or polycarbonate or glue or ink or any kind of material which can have the needed features.

The needed features of the protective cover may be the thickness or the adhesion criterion.

The thickness of the protective cover on the edge may be lower than 200µm.

The thickness of the protective cover on the edge may be lower than 100µm.

The thickness of the protective cover on the edge may be lower than 5µm.

The thickness of the protective cover on the edge may be as thin as possible to warrant the surface continuity between the polished surface and unpolished zone.

The adhesion criterion of the protective cover may be determined by considering at least one of the following parameters:
- the parameters of the polishing step (such as polishing material, polishing duration....),
- polished material such as metal or glass or polymer....
- the adhesion to the polished material in order that the protective order does not remove during the polishing step
- the adhesion to the polished material in order that the protective order can be remove easily and properly during the removing step
- a compromise between not removing during poshing step and removing easily and properly during the removing step

The thickness of the protective cover may be determined by considering at least one of the following parameters:
- polished material such as metal or glass or polymer....
- protective cover materials such as polycarbonate...
- parameters of the polishing step: polishing material, polishing duration....
- type of unpolished zone

According to one embodiment, the thickness of the protective cover may be superior to 10µm.

According to one embodiment, the thickness of the protective cover may be superior to 20µm.

According to one embodiment, the thickness of the protective cover may be comprised between 10µm and 350µm.

The thickness of the protective cover being superior to 10µm, it allows to avoid removing all the protective cover during the polishing step. Indeed, in the field of polishing of ophthalmic element, during the polishing, at least 10µm of materials are removed.

The thickness of the protective cover on the edge may be lower than 200µm.

The thickness of the protective cover on the edge may be lower than 100µm

The thickness of the protective cover on the edge may be lower than 5µm.

The thickness of the protective cover on the edge may be as thin as possible to warrant the surface continuity between the polished surface and unpolished zone.

The polishing at least a part of the surface may polish the part of the surface which is no covered by the protective cover.

The polishing at least a part of the surface may polish the part of the surface which is no covered by the protective cover. The polishing may be homogenous on the part of the surface which is no covered by the protective cover. In other words, the material stock removal by the polishing process may be homogenous on the uncovered surface.

During the polishing, material of the surface may be removed.

During the polishing, material which is no covered by the protective cover, may be removed.

The thickness of the material removal may be lower than 20µm, lower than 1µm and preferred lower than 0.1µm.

The removing may be a chemical (such as solvent or ethanol) or/and mechanical process (such a manual process, ultrasound bath or by rubbing with a cloth )

The surface comprising the at least one unpolished zone may be a surface of a mold intended to be used to mold the ophthalmic lens.

The surface of the mold before the polishing step may be coated with NiP or ferrous material.

The surface comprising the at least one unpolished zone may be a surface of a semi-finished lens or a finished lens.

The disclosure is directed to a method for manufacturing an ophthalmic device comprising a machining step to obtain the desired surface of the ophthalmic device. The machining step may be a cutting step also called a surfacing step. The machining step may be a molding step or a replicating step.

Figure 2B illustrates a method according to an embodiment of the present disclosure taken alone or in combinations, comprising a surfacing step 16.

Thus, according to this embodiment taken alone or in combinations, before the polishing step, a surfacing step 16 may be comprised during the manufacturing method. The surfacing step uses a tool to surface the surface of the ophthalmic device. The tool is made of a first material and fixed by a carrier element made of a second material. The first material has a higher hardness than the second element.

For example, the tool may be a diamond tool.

The disclosure also provides, according to a second aspect, an intermediate mold intended to be used to manufacture an ophthalmic lens. The intermediate mold may comprise: a metallic bulk, a surface of the metallic bulk comprising the at least one unpolished zone, and a protective cover disposed on a part or on the totality of the at least one unpolished zone.

The intermediate mold comprising the metallic bulk may comprise a coating having the at least one discontinuity.

The disclosure also provides, according to a third aspect, an ophthalmic lens. The ophthalmic lens comprises: a surface comprising at least one unpolished zone and a protective cover disposed on a part or on the totality of the at least one unpolished zone.

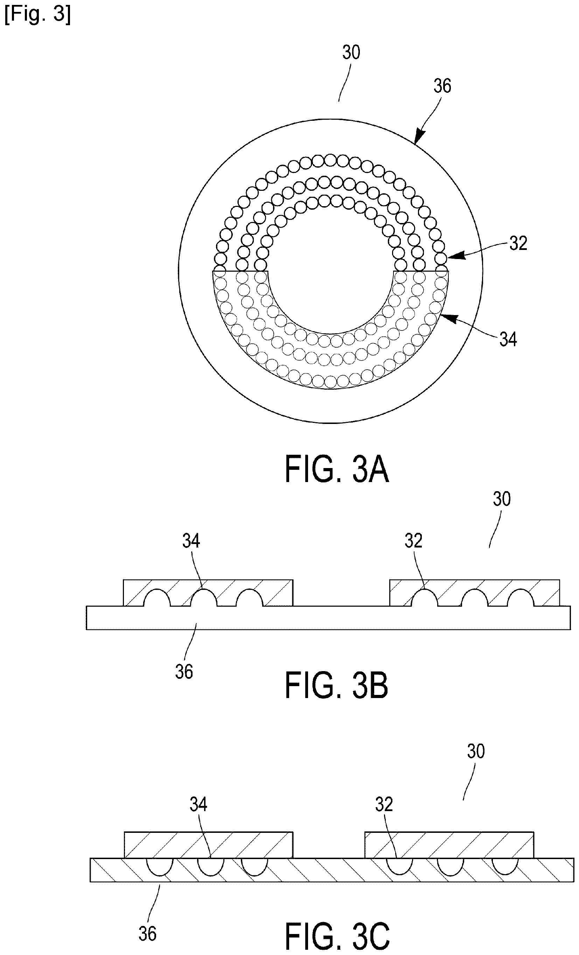

Figures 3A,3B and 3C represent an ophthalmic device with the protective cover respectively top and side view according two embodiments of the present disclosure.

In the figure 3A, the ophthalmic device 30 comprises a base 36. As illustrated, the ophthalmic device 30 may comprise further micro elements 32 arranged concentrically on a part of the base. The side view of figure 3A is illustrated according to two embodiments on figures 3B and 3C respectively with micro elements convex and concave. The base may be plane or curved (spherical or aspherical, symmetrical or asymmetrical) . As illustrated, the micro elements may be covered partially with a protective cover 32. The covered micro elements are the unpolished zone.

When the ophthalmic device is an ophthalmic lens, the base may be "plano", i.e. without optical power or with optical power (unifocal, bifocal, progressive).

The ophthalmic lens 30 may comprised further micro lenses 32 arranged concentrically on a part of the base. The micro lenses 32 may be the unpolished zone. The micro lenses 32 may be covered by a tape 34 in order to protect it during the polishing step.

The disclosure also provides, according to a fourth aspect, a semi-finished ophthalmic lens. The semi-finished ophthalmic lens comprises a surface comprising the at least one unpolished zone and a protective cover disposed on a part or on the totality of the at least one unpolished zone.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention as defined in the set of claims.

## Claims

1. A method for manufacturing an ophthalmic device, comprising a polishing step to polish a surface of the ophthalmic device comprising at least one unpolished zone, the at least one unpolished zone is a zone intended not to be polished, the polishing step comprising
- covering (10) during which a protective cover is provided on the surface so as to cover the at least one unpolished zone;
- polishing (12) at least a part of the surface;
- removing (14) the protective cover.

2. Method according to claim 1 wherein the covering (10) is taping and the protective cover is a protective tape.

3. Method according to claim 1 wherein the covering (10) is coating by inkjet or spin.

4. Method according to one of the preceding claims wherein the polishing (12) at least a part of the surface polishes the part of the surface which is no covered by the protective cover.

5. Method according to one of the claims 1 to 4 wherein the surface comprising the at least one unpolished zone is a surface of a mold intended to be used to manufacture a ophthalmic lens.

6. Method according to claim 5 wherein the surface of the mold before the polishing step (12) is coated with NiP or ferrous material.

7. Method according to one of the claims 1 to 4 wherein the surface comprising the at least one unpolished zone is a surface of a semi-finished lens or a finished lens.

8. Method according to any one of the preceding claims comprising before the polishing step (12), a surfacing (16) step by using a tool,
the tool being made of a first material and fixed by a carrier element made of a second material,
the first material having a higher hardness than the second element.

9. Method according to claim 8, wherein the tool is a diamond tool.

10. Method according to one of the preceding claims, wherein the at least one unpolished zone is micro element, protrusion, micro lens, engraving, groove, discontinuity, pattern, figure, scattering element(s), shape.

11. Method according to any one of the preceding claims wherein the thickness of the protective cover is superior to 10µm.

12. Method according to any one of the preceding claims wherein the unpolished zone is determined by a mask.

13. Intermediate mold intended to be used to manufacture an ophthalmic lens comprising
- metallic bulk
- a surface of the metallic bulk comprising the at least one unpolished zone
- a protective cover disposed on a part or on the totality of the at least one unpolished zone.

14. Ophthalmic lens comprising
- a surface comprising at least one unpolished zone
- a protective cover disposed on a part or on the totality of the at least one unpolished zone.

15. Semi-finished ophthalmic lens comprising
- a surface comprising the at least one unpolished zone
- a protective cover disposed on a part or on the totality of the at least one unpolished zone.
